# EUROPEAN PATENT APPLICATION

(11) **EP 4 020 875 A1**
(43) Date of publication of application: **29.06.2022**
(21) Application number: 20306693.1
(22) Date of filing: 23.12.2020
(51) Int. Cl.: H04L 9/08, H04L 9/14

(54) **METHOD, FIRST SERVER, SECOND SERVER, AND SYSTEM FOR TRANSMITTING SECURELY A KEY**

(71) Applicant: Thales DIS France SA, 92190 Meudon (FR)
(72) Inventor: DELSUC, Julien, 13881 Gémenos Cedex (FR); GOUGET, Aline, 13881 Gémenos Cedex (FR)
(74) Representative: Grevin, Emmanuel

(57) **Abstract**

A first server 12 accesses a first key encrypted with a public key yi relating to a second server 14. A method 20 for transmitting securely the first key KENC* or Kp_i* comprises:
- re-encrypting 24, by the first server, the first encrypted key using a predetermined commutative type encryption algorithm and a public key PK_Mj relating to a first device;
- sending 26, from the first server to a second server, the first re-encrypted key;
- decrypting 28, by the second server, using the associated commutative type decryption algorithm, the first re-encrypted key using a private key xi relating to the second server;
- sending 210, from the second server to a first device 16, the first encrypted key; and
- decrypting 212, by the first device, the first encrypted key using a private key SK_Mj relating to the first device.

## Description

### Field of the invention:

The invention relates generally to a method for transmitting securely a first (cryptographic) key.

Furthermore, the invention pertains to a system for transmitting securely a first key. The system includes a first server, a second server and a first device.

Moreover, the invention relates to a first server for transmitting securely a first key.

The invention pertains to a second server for transmitting securely a first key as well.

### State of the art:

US 2017/019377 A1 describes a solution in which a server receives, from a first device, a data folder encryption key and, from a second device, a second device public key. The server encrypts the data folder encryption key using the second device public key. Then, the server sends, to the second device, the encrypted data folder encryption key. The second device decrypts the encrypted data folder encryption key using a second vice private key. The second device accesses the data folder encryption key.

However, such a secure key transmission solution implies that the server is able to access the data folder encryption key in plaintext and also a data folder that is stored, at the server side, in an encrypted manner having used the data folder encryption key.

There is a need of a solution that allows preventing the server side from accessing a key in plaintext while transmitting the key in a secure manner to a device.

### Summary of the invention:

The invention proposes a solution for satisfying the just herein above specified need by providing a method for transmitting securely a first key.

According to the invention, a first server accesses the first key encrypted with a public key relating to a second server. The method comprises the following steps of:
- a) re-encrypting, by the first server, the first encrypted key using a predetermined commutative type encryption algorithm and a public key relating to a first device;
- b) sending, from the first server to a second server, the first re-encrypted key;
- c) decrypting, by the second server, using the associated commutative type decryption algorithm, the first re-encrypted key using a private key relating to the second server;
- d) sending, from the second server to a first device, the first encrypted key; and
- e) decrypting, by the first device, the first encrypted key using a private key relating to the first device..

The principle of the invention consists in that a first server accesses a key that is singly encrypted with a second server public key. The first server doubly encrypts the singly encrypted key using a predefined commutative type encryption algorithm and a device public key. The first server transmits, to the second server, the (resulting) doubly-encrypted key. The second server decrypts the doubly-encrypted key using the associated commutative type decryption algorithm and a second server private key. The second server transmits, to the device, the (resulting) singly-encrypted key. Then, the device decrypts the singly-encrypted key using a device private key.

A transmission of a key to a device thus involves in the invention solution two servers, namely a first server and a second server.

The first server which accesses a singly-encrypted key that is encrypted with a second server public key is not able to access a corresponding key in plaintext since only the second server accesses the second server private key that allows decrypting the singly-encrypted key.

The second server accessing a doubly-encrypted key that is encrypted twice, firstly with a second server public key and secondly with a device public key is only able to access, after a decryption using the second server private key, a corresponding singly-encrypted key. The second server is also not able to access a corresponding key in plaintext since only the device accesses the device private key that allows decrypting the singly-encrypted key.

Thus, only the device accesses a corresponding key in plaintext after a decryption of a singly-encrypted key. As a matter of fact, the device accesses the device private key that allows decrypting the singly-encrypted key that is encrypted only with the device public key.

The invention solution allows thus protecting access, at a server side, to a key to be transmitted, from a first server, through a second server, to a device since neither the first server nor the second server accesses the key in plaintext.

The invention solution allows transmitting, in an encrypted and secure fashion, a key, from a first server, through a second server, to a device while none of the first and second servers is able to access the key in plaintext.

The invention solution is secure at the server side, as none of the servers is able to access the key to be transmitted in plaintext even if the first and second servers cooperate with each other.

The invention solution architecture has therefore no single point of trust.

The invention solution is also secure at the device side, as the device uses its private key, as a decryption key to access the transmitted key in plaintext.

To allow such an invention key transmission in a secure manner, the first server uses a predefined commutative type encryption algorithm and the second server uses a commutative type decryption algorithm associated with the commutative type encryption algorithm.

Such a use of associated commutative type encryption/decryption algorithms allow encrypting and decrypting irrespective of the order of the performed encryption operations.

The first server which accesses the singly-encrypted key that has been firstly encrypted with the second server public key encrypts secondly the singly-encrypted key using the device public key.

Without using any associated commutative type encryption/decryption algorithm, the second server needs decrypting in an order that is reverse with respect to an order used for a first encryption level and a second encryption level. Thus, the second server is obliged to firstly decrypt using the device private key which is not available to the second server and therefore impossible.

Contrary to the abovementioned prior art solution, the invention solution does not include a unique server, as a single point of trust.

Contrary to the abovementioned prior art solution, the invention solution allows preventing the server side from accessing a key in plaintext while transmitting the key in a secure manner.

According to an additional aspect, the invention is a system for transmitting securely a first key.

According to the invention, the system includes a first server, a second server and a first device. The first server includes means for accessing the first key encrypted with a public key relating to the second server, the first server is configured to:
- re-encrypt the first encrypted key using a predetermined commutative type encryption algorithm and a public key relating to the first device;
- send, to the second server, the first re-encrypted key;
the second server is configured to:
- decrypt, using the associated commutative type decryption algorithm, the first re-encrypted key using a private keyrelating to the second server;
- send, to the first device, the first encrypted key; and
- the first device is configured to decrypt the first encrypted key using a private key relating to the first device.

The device includes, e.g., a mobile (tele)phone, a tablet, a portable Personal Computer (or PC), a terminal and/or any other computing type device.

Instead of a standalone device, the device may also cooperate locally with a Secure Element (or SE), as a (device) cooperating entity. The device thus cooperates with the entity that carries out at least in part the abovementioned decryption operation. The SE is incorporated within or communicatively coupled to the device, as an SE host device.

Within the present description, an SE is a smart object that includes a chip(s) that protect(s), as a tamper resistant component(s), access to stored and/or processed data, such as e.g., a private (cryptographic) key(s), and that is(are) intended to communicate data with an external device(s), like e.g., an SE host device.

According to a further additional aspect, the invention is a first server for transmitting securely a first key.

According to the invention, the first server including means for accessing the first key encrypted with a public key relating to a second server, the first server is configured to:
- re-encrypt the first encrypted key using a predetermined commutative type encryption algorithm and a public key relating to the first device; and
- send, to the second server, the first re-encrypted key.

Instead of a standalone server, the first server may also cooperate locally with a Hardware Security Module (or HSM), as a (server) cooperating entity. The first server thus cooperates with the entity that carries out at least the abovementioned encryption operation. The HSM is connected or communicatively coupled to the first server.

Within the present description, an HSM is a (physical) computing device, as a tamper resistant component(s), that protects access to stored and/or processed data, such as one or several private (cryptographic) keys, and that is(are) intended to communicate data with an external device(s), like e.g., a server.

According to still an additional aspect, the invention is a second server for transmitting securely a first key.

According to the invention, the second server is configured to:
- receive, from a first server, the first re-encrypted key, the first re-encrypted key being encrypted firstly with a public key relating to the second server and secondly using a predetermined commutative type encryption algorithm and a public key relating to a first device;
- decrypt, using the associated commutative type decryption algorithm, the first re-encrypted key using a private key relating to the second server; and
- send, to the first device, the first encrypted key.

Instead of a standalone server, the second server may also cooperate locally with an HSM, as a (server) cooperating entity. The second server thus cooperates with the entity that carries out at least the abovementioned decryption operation. The HSM is connected or communicatively coupled to the second server.

### Brief description of the drawings:

Additional features and advantages of the invention will be apparent from a detailed description of a preferred embodiment of the invention, given as an indicative and non-limitative example, in conjunction with the following drawings:

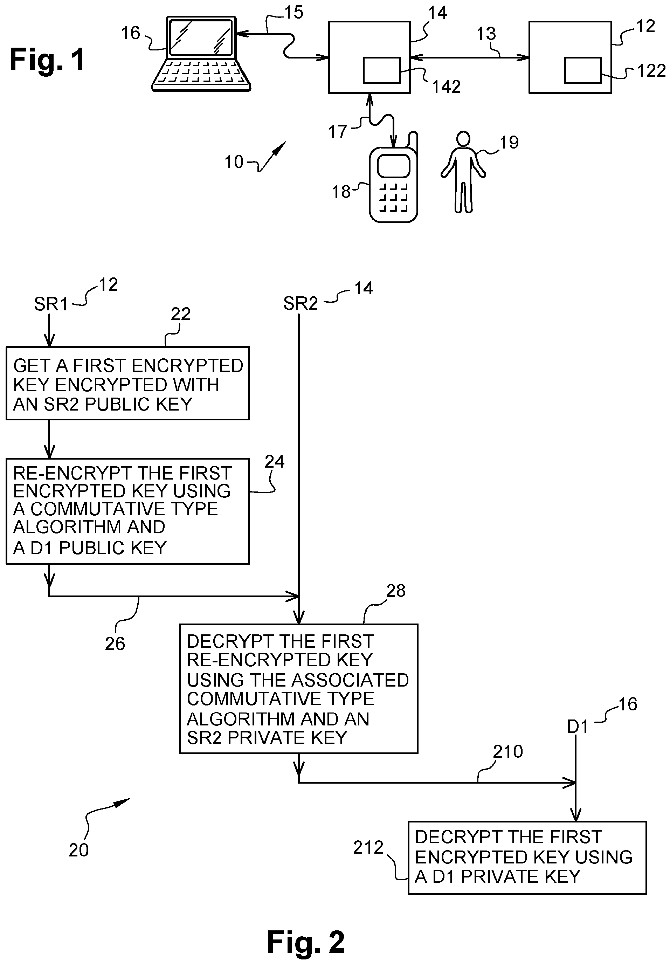

- Figure 1 is notably a simplified diagram of an embodiment of a system with a first, a second server and a first device, the first server accessing a (first) key encrypted with a second server public key, the first server being adapted to re-encrypt the encrypted key using a predetermined commutative type encryption algorithm and a device public key and provide the second server with the re-encrypted key, the second server being configured to decrypt the re-encrypted key using the associated commutative type decryption algorithm and a second server private key and provide the first device with the encrypted key, the first device being arranged to decrypt the encrypted key using a first device private key, according to the invention;
- Figure 2 is a first message flow between the first server, the second server and the first device of figure 1, so that the first server transmits securely, through the second server, to the first device, the key, according to the invention; and
- Figure 3 is a second message flow between a second device, the second server and the first server of figure 1, so that the second device transmits securely, through the second server, to the first server, the key, according to the invention.

### Detailed description:

Herein under is considered a case in which the invention method for transmitting securely a key is implemented by a first and a second server, each as a standalone server, and a first device, as a standalone device. Neither the first nor the second server cooperates with another entity, like e.g., an HSM, so as to perform one or several encryption/decryption operations that are described infra and that are carried out by the first server and the second server. The first device does not cooperate locally, i.e. at a device location, with another entity, like e.g., an SE, so as to perform the operations that are described infra and that are carried out by the first device.

The invention does not impose any constraint as to a kind of the SE type.

The SE may include a chip, like e.g., a Trusted Executed Environment (or TEE), incorporated in a device, or a chip that is communicatively coupled to the device, as an SE host device, and included in a smart card (or another medium). The SE may be fixed to or removable from its host device. As removable SE, the SE may include a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device.

Naturally, the herein below described embodiment is only for exemplifying purposes and is not considered to reduce the scope of the invention.

**Figure 1** shows schematically a system 10 for transmitting securely a first (cryptographic) key Kp_i*.

The connections between the different elements of the system 10 are preferably secured while using e.g., a secure channel, like e.g., TLS with mutual authentication.

The first key Kp_i* is e.g., a symmetric key that is e.g., used for encrypting/decrypting one or several user Data Element(s) (or DE(s)) for which a user 19 has preferably given her/his consent to share with another user or a company, as an entity that desires to consume or use the user DE(s).

The system 10 includes a first ServeR (or SR1) 12 and a second ServeR (or SR2) 14.

The SR1 12 may include an IDentity Provider (or IDP) type server.

The SR1 12 may be operated by an authority, a Mobile Network Operator (or MNO), a Mobile Virtual Network Operator (or MVNO), a service provider or on its behalf.

The SR2 14 may include a broker type server.

Each of the SR1 12 and the SR2 14 is hosted by a computer device(s) including, each, data processing means, like e.g., a controller(s), a Central Processing Unit (or CPU) and/or a processor(s) (not represented), and one or several Input/Output (or I/O) interfaces for exchanging data with outside.

The SR1 12 includes (or is connected to) an SR1 memory(ies) 122, as data storing means.

The SR2 14 includes (or is connected to) an SR2 memory(ies) 142, as data storing means.

The SR1 12 is accessible, from the device side, only through the SR2 14.

The entity, namely another user or a company, uses a first Device (or D1) 16.

The user 19 uses preferably a second Device (or D2) 18.

The D2 18 is preferably distinct from the D1 16.

Alternatively, the user 19, such as a patient, and the entity, such as a doctor, use both one and the same device, like e.g., the doctor's device.

Each of the D1 16 and the D2 18 includes a computing device that includes one or several (hardware) (micro)processors (one or several (micro)controllers and/or a CPU), as data processing means, including and/or being connected to one or several memories, as data storing means, and including or being connected to I/O interfaces that are internally all connected, through an internal bidirectional data bus.

The device I/O interfaces may include a wired and/or a contactless interface(s), to exchange, over a ContacT (or CT) and/or ContacT-Less (or CTL) type link(s) 15 and/or 17, through one or several communication networks, through the SR2 14, with the SR1 12.

Within the present description, the adjective "CTL" denotes notably that an involved communication means communicates using one or several Short Range (or SR) type RadioFrequency (or RF) links.

The SR RF may include about 13, 56 Mhz.

The device I/O interfaces may include a wireless interface(s), to exchange, over a Long Range (or LR) type RF link(s) 15 and/or 17, through one or several communication networks, through the SR2 14, with the SR1 12.

The LR RF may be fixed at several hundreds or thousands of MHz, like e.g., around 850, 900, 1800, 1900 and/or 2100 MHz.

The device I/O interfaces include or are connected preferably to a Man Machine Interface (or MMI) for interfacing with a user, so as to interact with the user.

The device MMI may include a display screen(s), a physical (and/or virtual) keyboard(s), a loudspeaker(s) (not represented) and/or a camera(s) (not represented).

The first key Kp_i* is e.g., randomly generated.

The first key Kp_i* is preferably specific to each user Ui.

The first key Kp_i* may be a master key or a key derived from a master key.

The first key Kp_i* is preferably a symmetric key.

The first key Kp_i* is secret and has to be transmitted in an encrypted manner.

The IDentified user 19 denoted ID_Ui completes all the n DEs, namely DE_1, DE_2, ..., DE_n on e.g., a Web Server (or WS) or an application supported by the D2 18.

The user DE(s) or ID_DE(s) may include a plurality of fields, such as e.g., a first name, a surname, a phone number, an email address, a shoe size and/or other user personal DE(s).

The D2 18 (or the WS) is preferably arranged to generate the first key Kp_i*.

The D2 18 (or the WS) may generate two keys KENC* and KMAC* using the first key Kp_i* and e.g., a standardized Key Derivation Function (or KDF) as follows:
- let compute KENC* = KDF[Kp_i*] ("encryption", 1); and
- let compute KMAC* = KDF[Kp_i*] ("mac", 2).

The key KENC*, as a key derived from a master key, is used for encrypting the DE(s).

The key KMAC*, as another key derived from a master key, is used for generating a Message Authentication Code (or MAC) that allows an addressee to authenticate the concerned DE(s), as the message, and verify that the concerned DE(s) has not been modified, i.e. the concerned data integrity is verified.

The D2 18 (or the WS) is arranged to encrypt preferably all the DEs using the (generated) KENC*

The D2 18 (or the WS) is configured to generate preferably, for each and every DE, DEJ, a value IV*_j, and a ciphertext C*_j and a MAC M*_j as follows:
- let compute C*_j = ENC[KENC*](IV*_j, DE_j) where ENC is typically an Advanced Encryption Standard (or AES) -Cipher Block Chaining (or CBC) algorithm;
- let compute M*_j = MAC[KMAC*](IV*_j| |C*_j) where MAC is e.g., a Cipher-based Message Authentication Code (or CMAC) - Advanced Encryption Standard (or AES) type algorithm and "|" is a concatenation symbol.

The value IV*_j allows initializing a DE encryption.

The value IV*_j may be a random value or computer from the ID_DE_j.

The D2 18 (or the WS) is adapted to encrypt preferably the first key Kp_i*.

To encrypt the first key Kp_i* using the SR1 PK or PK_IDP, the D2 18 uses for instance what follows:
- let compute KC = PKENC[PK_IDP](Kp_i*) where PKENC is a Public-Key ENCryption type algorithm, such as e.g., an EIGamal type encryption algorithm, and PK_IDP is the Public Key (or PK) relating to the IDP or SR1 12.

The encryption algorithm PKENC allows transforming a plaintext into a ciphertext including two elements.

The encryption algorithm PKENC is preferably cryptographically compatible with a commutative type encryption algorithm, such as e.g., an EIGamal type encryption algorithm. More exactly, the encryption algorithm PKENC is transformable into the commutative type encryption algorithm.

The EIGamal type encryption algorithm is described in a document entitled "Commutative-like encryption-A new characterization of EIGamal". The document is available at the following site address https://arxiv.org/pdf/1011.3718.pdf and that has been published on Nov.16th 2010.

The EIGamal type encryption algorithm is commutative. In other words, an order of corresponding decryption operations may be or be not different from a reverse order of the performed encryption operations.

### Key encryption using EIGamal type encryption:

- let G be a group that is cyclic of an order q with a generator g;
- let choose randomly an integer r1 from {1 , ... , q - 1}; where r1 is a first random value that is generated only once;
- let compute KC = (g^{r1}, Kp_i*· PK_IDP^{r1}), where (g^{r1}, Kp_i*· PK_IDP^{r1}) is e.g., an EIGamal type encryption, as the commutative type encryption algorithm, that includes two elements g^{r1}, as a first element, and Kp_i* PK_IDP^{r1}, as a second element, in which g^{r1} is g to the power of r1 and PK_IDP is the Public Key relating to the SR1 12.

The D2 18 is preferably adapted to encrypt the first key Kp_i* using the PK_IDP, and the encryption algorithm PKENC.

The encryption algorithm PKENC allows transforming a plaintext, such as e.g., the first key Kp_i*, including one element into a ciphertext KC including two elements, namely g^{r1}, as a first element, and Kp_i*·PK_IDP^{r1}, as a second element.

The D2 18 (or the WS) obtains a corresponding (resulting) ciphertext KC, as a first encrypted key and a singly encrypted key.

The D2 (or the WS) 18 is therefore arranged to generate or retrieve the first encrypted key KC and the encrypted DEs.

The first encrypted key KC is singly encrypted.

The KC is a ciphertext including two elements.

The D2 18 is adapted to send, to the SR2, the first encrypted key KC and preferably the encrypted DEs.

According to a particular embodiment, the D2 18 is adapted to send, to the SR2, the first encrypted key KC and preferably the ID_Uᵢ., {ID_DE1, IV*_1, C*_1, M*_1},..., {ID_DEm, IV*_m, C*_m, M*_m} where the ID_Ui allows identifying the user who shares the DEs, {ID_DEi, IV*_i, C*_i, M*_i} is a tuple relating to the DEi, the ID_DEi allows identifying the DEi, the IV*_i allows initializing the encryption of the DEi, the C*_i is a ciphertext relating to the DEi, the M*_i is a MAC relating to the DEi, m is comprised between 1 and n. The encrypted DEs C*_m may be a subset of all the DEs that include m elements.

The D2 18 thus plays a role of a writer of the encrypted DEs, at the SR1 12 side.

To send the first encrypted key KC and preferably the encrypted DEs, the D2 18 does not manage neither any private (or secret) key relating to the D2 18 (or SK_D2) nor any corresponding Public Key relating to the D2 18 (or PK_D2).

The D2 18 does not know who is a final addressee of the encrypted DEs, namely the D1 16 in a scenario that is further described.

The D2 18 does not use any Public Key relating to the final addressee, denoted PK_Mj.

The SR2 may be configured to generate a symmetric key Ks. The symmetric key Ks may be used for re-encrypting at least part of the (received) encrypted DEs.

The SR2 preferably stores the symmetric key Ks.

The SR2 may be adapted to re-encrypt at least part of the (received) encrypted DEs using the symmetric key Ks.

The SR2 is adapted to receive and re-encrypt the (received) first encrypted key KC using a Public Key relating to the SR2 or yi or y.

The yi or y is preferably generated using a commutative type encryption algorithm, such as e.g., an EIGamal type encryption algorithm.

To generate the yi or y, the SR2 performs e.g., what follows:

### Key generation

- let choose randomly an integer x from {1 , ... , q - 1 } where x is a secret key;
- let compute y := g^{x} mod q where y is the corresponding public key and g^{x} is g to the power of x and mod is the modulo operation; and
- let compute an EIGamal Key pair (x, y= g^{x}).

The (resulting) SR2 EIGamal key pair is (x, y= g^{x}) that is independent from the concerned user such as e.g., the user 19.

The SR2 EIGamal key pair is preferably (xi, yi= g^{xi}) specific to the user Ui, such as e.g., the user 19, where xi replaces x and yi replaces y in the abovementioned formulas.

To re-encrypt the first encrypted key KC, the SR2 14 carries out e.g., the following steps:

### Key re-encryption using EIGamal type encryption:

- let re-encrypt KC by performing the following steps:
- let generate a second random value r2 that is generated only once;
- let compute yᵢ^{r2};
- let then re-encrypt KC = RKC = (g^{r1}, g^{r2}, Kp_i*· PK_IDP^{r1}·yᵢ^{r2})
where (g^{r1}, g^{r2}, Kp_i* · PK_IDP^{r1}·yf²) is an EIGamal type encryption algorithm that includes three elements g^{r1}, as a first element, g^{r2}, as a second element, and
Kp_i*· PK_IDP^{r1}·yᵢ^{r2}, as a third element, in which "·" is the multiplication operation, yi is the Public Key relating to the SR2 that relates preferably to each user Ui. The three elements allow having the commutativity property of the (Public Key) encryption algorithm.

The (resulting) RKC is the first re-encrypted key RKC, as a doubly-encrypted key.

The RKC is a ciphertext including three elements.

The SR2 14 is adapted to send, to the SR1 12, the first re-encrypted key RKC, as a doubly-encrypted key. The doubly-encrypted key is the first key that has been firstly encrypted using the PK_IDP, as the SR1 PK, and secondly encrypted using the SR2 PK or yi.

According to a particular embodiment, the SR2 14 is adapted to send, to the SR1 12, the first re-encrypted key RKC and preferably the ID_Ui., {ID_DE1, IV*_1, C*_1, M*_1},..., {ID_DEm, IV*_m, C*_m, M*_m} where the ID_Ui allows identifying the user who shares the DEs, {ID_DEi, IV*_i, C*_i, M*_i} is a tuple relating to the DEi, the ID_DEi allows identifying the DEi, the IV*_i allows initializing the encryption of the DEi, the C*_i is a ciphertext relating to the DEi, the M*_i is a MAC relating to the DEi, m is comprised between 1 and n. The encrypted DEs C*_m may be a subset of all the DEs that include m elements.

The SR2 14 is preferably configured to send, to the SR1 12, the encrypted DEs.

The SR2 14 is adapted to receive, from the SR1 12, a first re-encrypted key RDRKC (further described), as a doubly-encrypted key RDRKC.

The doubly-encrypted key RDRKC is the first key Kp_i* that has been firstly encrypted using yi, as the SR2 PK, and secondly encrypted using PK_M_{j,}, as the D1 PK and e.g., the EIGamal type encryption algorithm, as a commutative type encryption algorithm.

The SR2 14 is configured to decrypt the first re-encrypted key RDRKC using the SR2 SK, namely xi, and e.g., the EIGamal type decryption algorithm, as a commutative type decryption algorithm.

The commutative type decryption algorithm is associated with the commutative type encryption algorithm that has been used for re-encryting the first key Kp_i* and thus generating the doubly-encrypted key RDRKC.

To decrypt the first re-encrypted key RDRKC, the SR2 14 carries out e.g., the following steps:
- let compute DRDRKC:
   DRDRKC=(g^{r3}, Kp_i*·PK_Mⱼ^{r3})
   where Kp_i* · PK_Mⱼ^{r3} = (Kp_i* · yi^{r2} · PK_Mⱼ^{r3}) · ((g^{r2})^{xi})⁻¹ is a commutative type EIGamal type decryption of the first re-encrypted key RDRKC under the SR2 SK, namely xi which is preferably related to the user Ui.

The (resulting) EIGamal type decryption ciphertext DRDRKC includes a ciphertext including two elements g^{r3}, as a first element, and Kp_i* · PK_Mⱼ^{r3}, as a second element.

The DRDRKC constitutes the first encrypted key that is singly encrypted and has been encrypted using the D1 PK, namely yi.

The SR2 14 is adapted to send, to the D1 16, the first encrypted key DRDRKC, as a singly-encrypted key. The singly-encrypted key DRDRKC is the first key Kp_i* that remains encrypted using only the PK_M_{j,}, as the D1 PK.

According to a particular embodiment, the SR2 14 is adapted to send, to the D1 16, the first re-encrypted key RKC and preferably the ID_Ui., {ID_DE1, IV*_1, C*_1, M*_1},..., {ID_DEm, IV*_m, C*_m, M*_m} where the ID_Ui allows identifying the user who shares the DEs, {ID_DEi, IV*_i, C*_i, M*_i} is a tuple relating to the DEi, the ID_DEi allows identifying the DEi, the IV*_i allows initializing the encryption of the DEi, the C*_i is a ciphertext relating to the DEi, the M*_i is a MAC relating to the DEi, m is comprised between 1 and n. The encrypted DEs C*_m may be a subset of all the DEs that include m elements. Alternatively, instead of being singly encrypted using only the first key Kp_i*, the DEs is doubly-encrypted using firstly the first key Kp_i^{*} at the D2 18 side and secondly the symmetric key Ks at the SR2 side.

The SR1 12 is preferably adapted to generate a private (or Secret) Key, or SK_IDP and a corresponding Public Key relating to the SR1 or PK_IDP.

To generate the PK_IDP, the SR1 carries out e.g., what follows:

### Key generation

- let choose randomly an integer x from {1,..., q - 1 } where x is a secret key;
- let compute PK_IDP := g^{SK_IDP} mod q where y is the corresponding public key and g^{x} is g to the power of x and mod is the modulo operation; and
- let compute an EIGamal key pair (SK_IDP, PK_IDP=g^{SK_IDP}).

The (resulting) SR1 EIGamal key pair is (SK_IDP, PK_IDP=g^{SK_IDP}) that is independent from the concerned user such as e.g., the user 19.

The SR1 12 is adapted to receive and decrypt the (received) first re-encrypted key RKC, as the doubly encrypted key, using the associated type decryption algorithm and the SR1 SK or SK_IDP.

To decrypt the first re-encrypted key RKC, the SR1 12 uses an EIGamal type decryption algorithm as follows:
The EIGamal type decryption algorithm, as a commutative type decryption algorithm, is associated to the EIGamal type encryption algorithm, as a commutative type encryption algorithm.

The EIGamal type decryption algorithm allows transforming a ciphertext including two elements, such as (c₁,c₂), into a plaintext including one element, such as m.

To decrypt the first re-encrypted key RKC, the SR1 12 uses an EIGamal type decryption algorithm and a private (Secure) Key relating to the SR1, or SR1 SK.

To decrypt the first re-encrypted key RKC, the SR1 12 carries out e.g., the following steps:
- let compute DRKC = (g^{r2}, Kp_i* · yᵢ^{r2}) that is an EIGamal type encryption of the first encrypted key Kp_i* under only the SR2 PK, namely yi.

The (resulting) EIGamal type encryption ciphertext includes a ciphertext including two elements g^{r2}, as a first element, and Kp_i* · yᵢ^{r2}, as a second element;
- let compute ((g^{r1})^{SK_IDP}) = PK_IDP^{r1};
- let then compute Kp_i* · yᵢ^{r2} = (Kp_i* · PK_IDP^{r1} · yᵢ^{r2}) · ((g^{r1})^{SK_DP})⁻¹.

The (resulting) DRKC is a ciphertext including two elements, g^{r2}, as a first element, and Kp_i* · yᵢ^{r2}, as a second element.

The DRKC constitutes the first encrypted key Kp_i* that is singly encrypted and has been encrypted using the SR2 PK, namely yi.

The SR1 12 is preferably configured to store the first encrypted key DRKC.

The first encrypted key DRKC is singly encrypted.

Alternatively, i.e. instead of storing the first encrypted key DRKC, the SR1 12 cooperates with another server (not represented) that is connected to the SR1 12 which stores the first encrypted key DRKC.

The SR1 12 is preferably configured to store the (received) encrypted DE(s), as encrypted user data. The encrypted user data has been encrypted with the first key Kp_i* to be securely transmitted.

Alternatively, i.e. instead of storing the encrypted DE(s), the SR1 12 cooperates with another server (not represented) that is connected to the SR1 12 which stores the encrypted DE(s).

According to a particular embodiment, the SR1 is adapted to store the first encrypted key DRKC and preferably the ID_Ui., {ID_DE1, IV*_1, C*_1, M*_1},..., {ID_DEm, IV*_m, C*_m, M*_m} where the ID_Ui allows identifying the user who shares the DEs, {ID_DEi, IV*_i, C*_i, M*_i} is a tuple relating to the DEi, the ID_DEi allows identifying the DEi, the IV*_i allows initializing the encryption of the DEi, the C*_i is a ciphertext relating to the DEi, the M*_i is a MAC relating to the DEi, m is comprised between 1 and n. The encrypted DEs C*_m may be a subset of all the DEs that include m elements. Alternatively, instead of being singly encrypted using only the first key Kp_i*, the DEs is doubly-encrypted using firstly the first key Kp_i* at the D2 18 side and secondly the symmetric key Ks at the SR2 side.

The SR1 12 may be arranged to receive, through the SR2 14, a request for accessing one or several encrypted DEs relating to the user Ui.

The SR1 12 is preferably able to authenticate a sender of the DE accessing request.

The SR1 12 is preferably able to verify whether an owner of the requested encrypted DEs has or has not given her/his consent to share a requested DE field(s).

The SR1 12 is arranged to access, only if the sender request is successfully authenticated and/or the owner has given her/his consent to share a requested DE field(s) (when applicable, i.e. when the SR1 12 authenticates the request sender and/or when the SR1 12 verifies that an owner of the requested encrypted DEs has given her/his consent to share a requested DE field(s)), the first encrypted key DRKC, as the first key encrypted with the SR2 PK, namely yi.

The SR1 12 is configured to re-encrypt the first encrypted key DRKC using e.g., the commutative type EIGamal encryption algorithm, and a Public Key relating to the D1 16 or denoted PK_Mj.

To re-encrypt the first encrypted key DRKC, the SR1 12 carries out e.g., the following step:
- let generate a random value r3 that is generated only once;
- let compute PK_Mⱼ^{r3};
- let re-encrypt DRKC in RDRKC = (g^{r2}, g^{r3}, Kp_i* · yᵢ^{r2} · PK_Mⱼ^{r3}) that is an EIGamal type encryption of the first key Kp_i* under the SR2 PK, namely yi, and the D1 PK, namely PK_Mj.

The (resulting) ciphertext RDRKC includes a ciphertext including three elements g^{r2}, as a first element, g^{r3}, as a second element, and Kp_i* · yᵢ^{r2} · PK_Mⱼ^{r3}, as a third element.

The commutative type encryption algorithm allows transforming a first ciphertext including two elements into a second ciphertext including three elements.

The RDRKC constitutes the first re-encrypted key Kp_i* that is doubly encrypted and has been encrypted using the SR2 PK, namely yi, and the D1 PK, namely PK_Mⱼ.

The SR1 12 is adapted to send, to the SR2 14, the first re-encrypted key RDRKC, as a doubly-encrypted key. The doubly-encrypted key RDRKC is the first key that has been firstly encrypted using yi, as the SR2 PK, and secondly encrypted using PK_Mⱼ, D1 PK and e.g., the EIGamal type encryption algorithm, as a commutative type encryption algorithm.

The SR1 12 is preferably adapted to send, to the SR2, only if the sender request is successfully authenticated and/or the owner has given her/his consent to share a requested DE field(s) (when applicable, i.e. when the SR1 12 authenticates the request sender and/or when the SR1 12 verifies that an owner of the requested encrypted DEs has given her/his consent to share a requested DE field(s)) at least part of the requested encrypted DEs.

The IDentified D1 16 denoted ID_Mj is preferably arranged to request, through the SR2 14, to the SR1 12, at least a part of all the n DEs, namely DE_1, DE_2, ..., DE_n on e.g., a WS or an application supported by the D1 16 (not represented).

The D1 16 is preferably configured to generate an ELGamal key pair with a private (or Secure) Key relating to the D1 16 denoted SK_Mj and a corresponding Public Key relating to the D1 16 denoted PK_Mj.

To generate the D1 EIGamal key pair, the D1 16 carries out e.g., what follows:

### Key generation

- let choose randomly an integer x from {1,..., q - 1 } where x is a secret key;
- let compute PK_Mj := g^{SK_Mj} mod q where PK_Mjis the corresponding public key and g^{SK_Mj} is g to the power of SK_Mj and mod is the modulo operation; and
- let compute an EIGamal Public Key (SK_Mj, PK_Mj= g^{SK_Mj}).

The D1 16 (or the WS) stores, preferably in a secure manner, the SK_Mj, as a D1 SK.

The D1 16 (or the WS) is preferably arranged to receive and decrypt a first encrypted key DRDRKC using the D1 SK, as a private key relating to the D1.

To decrypt the first encrypted key DRDRKC using the SK_Mj, the D1 16 (or the WS) is preferably adapted to use a decryption algorithm that is associated to the encryption algorithm that has been used to encrypt the first key Kp_i* at its origin, namely at the D2 18 side.

To decrypt the first encrypted key DRDRKC using the SK_Mj, the D1 16 carries out e.g., the following step:
- let compute Kp_i* = (Kp_i* · PK_Mⱼ^{r3}) · ((g^{r3})^{SK_Mj})⁻¹

The decryption algorithm allows transforming a ciphertext DRDRKC including two elements, namely g^{r3}, as a first element, and Kp_i* · PK_Mⱼ^{r3}, as a second element, into a plaintext including one element, namely the first key Kp_i*.

The D1 16 is able generate (or retrieve) the first key Kp_i*.

The D1 16 is preferably arranged to decrypt the (received) encrypted DEs using the the first key Kp_i*.

The D1 16 thus plays a role of a reader of the resulting DEs.

**Figure** 2 shows a message flow 20 that involves the SR1 12, the SR2 14 and the D1 16, so as to transmit securely the first key Kp_i*.

The D1 16 is a device used by a Merchant or Mj, as an entity that desires to use the first key Kp_i* that is registered in a manner that is encrypted at the SR1 12 side and that is to be securely transmitted from the SR1 12, through the SR2, to the D1 16.

The entity may also desire to use one or several encrypted DEs that have been encrypted using at least first key Kp_i*.

It is assumed that the SR1 12 accesses DRKC, as the first key Kp_i* encrypted with the yi, as an SR2 PK that is preferably specific to the user 18 whom the Mj wants to use the first key Kp_i*.

It is also assumed that the SR1 12 accesses a PK relating to each Mj, denoted PK_Mj, as a Device PK, that may query the SR1 12.

Optionally, the D1 16 sends (not represented), through the SR2 14, to the SR1 12, a request for getting a first encrypted key.

Optionally, the D1 16 sends (not represented), through the SR2 14, to the SR1 12, a request for accessing one or several encrypted DEs. The SR1 12 may verify whether an owner of the encrypted DE(s) has or has not given her or his consent to share with the D1 16 at least in part the encrypted DEs.

The SR1 12 retrieves 22 the first encrypted key DRKC. The first encrypted key DRKC has been encrypted with yi, as an SR2 PK.

The SR1 12 re-encrypts 24 the first encrypted key DRKC using a predefined commutative type encryption algorithm and PK_Mj, as a D1 PK.

The commutative type encryption algorithm includes a commutative type EIGamal encryption algorithm.

The SR1 12 sends 26, to the SR2 14, the (resulting) first re-encrypted key RDRKC.

Optionally, the SR1 12 sends, through the SR2 14, to the D1 16, one or several encrypted DE(s). The encrypted DE(s) is(are) encrypted at least with the first key Kp_i*.

According to a particular embodiment (not represented), the SR2 14 storing a symmetric key Ks, the SR1 12 sends, to the SR2 14, one or several doubly encrypted DE(s). The doubly encrypted DE(s) is(are) encrypted with the first key Kp_i* and the symmetric key Ks. The SR2 14 decrypts the doubly encrypted DE(s) using the symmetric key Ks. The SR2 14 sends, to the D1 16, one or several singly encrypted DE(s). The singly encrypted DE(s) is encrypted (only) with the first key.

Optionally, the SR2 24 stores (not represented) a log of the encrypted key access request(s) originating from the device side, so as to control that the SR1 12 does not send to a device the encrypted key without having been previously requested.

Once the SR2 24 has received the first re-encrypted key RDRKC, the SR2 24 decrypts 28 the first re-encrypted key RDRKC using the associated commutative type decryption algorithm and xi, as an SR2 SK. The xi relating to the SR2 is the private key associated with the public key yi relating to the SR2.

The SR2 14 sends 210, to the D1 16, the (resulting) first encrypted key DRDRKC.

Optionally, the SR1 12 sends (not represented), through the SR2 14, to the D1 16, only the encrypted DE(s) which the owner has given her or his consent to share with the D1 16.

Once the D1 16 has received the first encrypted key DRDRKC, the D1 16 decrypts 212 the first encrypted key DRDRKC using the SK_Mj, as the D1 SK. The SK_Mj relating to the D1 is the private key associated with the public key PK_Mj relating to the D1.

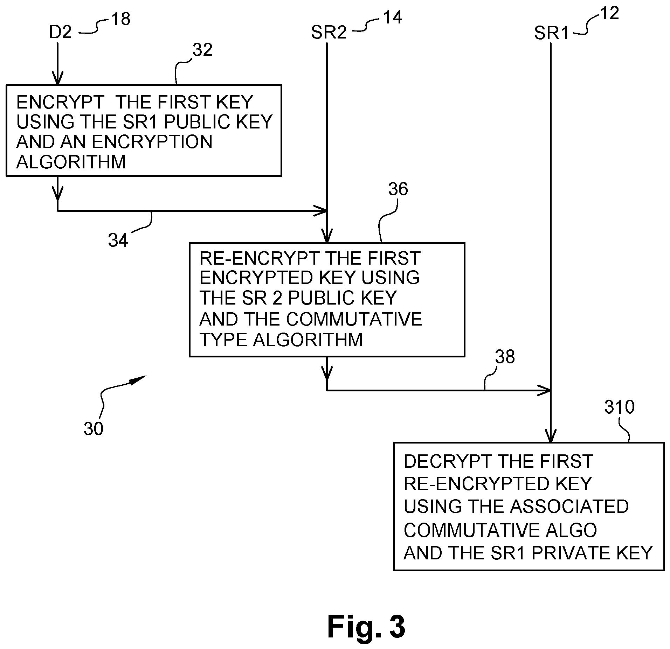

**Figure 3** shows a message flow 30 that involves the D2 18, the SR1 12 and the SR2 14, so as to transmit securely the first key Kp_i*.

The D2 18 is a device used by the user 19 or Ui, as a user that desires to share a first key Kp_i* that is to be securely transmitted, through the SR2 14, to the SR1 12, and that is to be registered in an encrypted manner at the SR1 12 side.

The user 19 may also desire to share one or several encrypted DEs that have been encrypted using at least first key Kp_i*.

It is assumed that the SR2 14 accesses yi, as an SR2 PK that is preferably specific to the user 18 whom the Mj wants to use the first key Kp_i*. More exactly, the SR2 14 accesses, for each user Ui, yi, as a Public key relating to the SR2 14 that is registered at the SR2 14 side.

It is still assumed that the D2 18 accesses the PK relating to the SR1 12, denoted PK_IDP.

The D2 18 encrypts 32 the first key Kp_i* using an encryption algorithm and PK_IDP, as a the SR1 PK.

The encryption algorithm is cryptographically compatible with the commutative type encryption algorithm.

The D2 18 sends 34, to the SR2 14, the (resulting) first encrypted key KC.

Optionally, the D2 18 sends, through the SR2 14, to the SR1 12, one or several encrypted DE(s). The encrypted DE(s) is(are) encrypted with the first key Kp_i*.

Optionally, the SR2 14 storing a symmetric key Ks, the D2 18 sends, to the SR2 14, one or several singly encrypted DEs, the singly encrypted DEs being encrypted with the first key Kp_i*, the SR2 14 encrypts the singly encrypted DEs using the symmetric key Ks. The SR2 14 sends, to the SR1 12, one or several doubly encrypted DEs. The doubly encrypted DE(s) is(are) encrypted with the first key Kp_i* and the symmetric key Ks.

Once the SR2 24 has received the first encrypted key KC, the SR2 24 re-encrypts 36 the first encrypted key KC using the commutative type encryption algorithm and yi, as an SR2 PK. The yi relating to the SR2 is the public key associated with the private key xi relating to the SR2.

The SR2 14 sends 38, to the SR1 12, the (resulting) first re-encrypted key RKC.

Once the SR1 12 has received the first re-encrypted key RKC, the SR1 12 decrypts 310 the first re-encrypted key RKC using the associated commutative type decryption algorithm and the SK_IDP, as the SR1 SK. The SK_IDP relating to the SR1 12 is the private key associated with the public key PK_IDP relating to the SR1.

The invention allows securing, simply and efficiently, a transmission of a (cryptographic) key from an SR1, through an SR2, to a D1.

The invention allows securing, simply and efficiently, a transmission of a (cryptographic) key from a D2, through an SR2, to an SR1.

The invention allows providing an asynchronous transmission of the key and/or the DE(s), i.e. the D1, as a reader, does not have to be connected to the SR1 at the same time than the D2, as a writer or an owner. In other words, the user does not need to be present when the entity reads the key that may be used for decrypting encrypted DE(s) written, i.e. stored at the SR1 side.

The invention may allow, based on the user or writer consent that is managed at the SR1 side, a selective DE sharing.

The invention does not need to decrypt the first encrypted key Kp_i* with any other user or entity key, at the D1 or reader side.

The invention is notably applicable for a key that is used for decrypting one or several DEs that is(are) transmitted along with the key that is transmitted from the SR1, through the SR2, to the D1 and/or from the D2, through the SR2, to the SR1.

The invention does not have any single point of trust.

## Claims

1. A method (20) for transmitting securely a first key (KENC* or Kp_i*), a first server (12) accessing the first key encrypted with a public key (yi) relating to a second server (14), the method comprises the following steps of:
- a) re-encrypting (24), by the first server, the first encrypted key using a predetermined commutative type encryption algorithm and a public key (PK_Mj) relating to a first device;
- b) sending (26), from the first server to a second server, the first re-encrypted key;
- c) decrypting (28), by the second server, using the associated commutative type decryption algorithm, the first re-encrypted key using a private key (xi) relating to the second server;
- d) sending (210), from the second server to a first device (16), the first encrypted key; and
- e) decrypting (212), by the first device, the first encrypted key using a private key (SK_Mj) relating to the first device.

2. The method according to claim 1, wherein the commutative type encryption algorithm allows transforming a first ciphertext including two elements into a second ciphertext including three elements.

3. The method according to claim 1 or 2, wherein the commutative type encryption algorithm includes an EIGamal type encryption algorithm.

4. The method according to any previous claim, wherein the first server sends, through the second server, to the first device, at least one encrypted data element, the at least one encrypted data element being encrypted at least with the first key.

5. The method according to any previous claim, wherein, the second server storing a symmetric key, the first server sends, to the second server, at least one doubly encrypted data element, the at least one doubly encrypted data element being encrypted with the first key and the symmetric key, the second server decrypts the at least one doubly encrypted data element using the symmetric key and the second server sends, to the first device, at least one singly encrypted data element, the at least one singly encrypted data element being encrypted with the first key.

6. The method according to any previous claim, wherein, prior to the step a) of re-encrypting, by the first server, the first encrypted key, the first device sends, through the second server, from the first server, a request for accessing at least one encrypted data element.

7. The method according to claim 6, wherein, prior to the step a) of re-encrypting, by the first server, the first encrypted key, the first server verifies whether an owner of the at least one encrypted data element has or has not given her or his consent to share the at least one encrypted data element with the first device.

8. The method according to any previous claim, wherein the method further includes:
- encrypting (32), by a second device, the first key using a public key relating to the first server and an encryption algorithm, the encryption algorithm being cryptographically compatible with the commutative type encryption algorithm;
- sending (34), from the second device, to the second server, the first encrypted key;
- re-encrypting (36), by the second server, the first encrypted key using the commutative type encryption algorithm and the public key (yi) relating to the second server;
- sending (38), from the second server to the first server, the first re-encrypted key; and
- decrypting (310), by the first server, the first re-encrypted key using the associated commutative type decryption algorithm and a private key relating to the first server.

9. The method according to claim 4, wherein the encryption algorithm allows transforming a plaintext including one element into a ciphertext including two elements.

10. The method according to claim 4 or 5, wherein, to carry out the step e) of decrypting, by the first device, the first encrypted key, the first device uses a decryption algorithm, the decryption algorithm being associated to the encryption algorithm.

11. The method according to claim 6, wherein the decryption algorithm allows transforming a ciphertext including two elements into a plaintext including one element, the decryption algorithm being associated to the encryption algorithm.

12. The method according to any of claims 6 to 11, wherein, the second server storing a symmetric key, the second device sends, to the second server, at least one singly encrypted data element, the at least one singly encrypted data element being encrypted with the first key, the second server encrypts the at least one singly encrypted data element using the symmetric key and the second server sends, to the first server, at least one doubly encrypted data element, the at least one doubly encrypted data element being encrypted with the first key and the symmetric key.

13. A system (10) for transmitting securely a first key (KENC* or Kp_i*), the system including a first server (12), a second server (14) and a first device (16), the first server including means for accessing the first key encrypted with a public key (yi) relating to the second server, the first server is configured to:
- re-encrypt (24) the first encrypted key using a predetermined commutative type encryption algorithm and a public key (PK_Mj) relating to the first device;
- send (26), to the second server, the first re-encrypted key;
the second server is configured to:
- decrypt (28), using the associated commutative type decryption algorithm, the first re-encrypted key using a private key (xi) relating to the second server;
- send (210), to the first device, the first encrypted key; and
the first device is configured to decrypt (212) the first encrypted key using a private key (SK_Mj) relating to the first device.

14. A first server (12) for transmitting securely a first key (KENC* or Kp_i*), the first server including means for accessing the first key encrypted with a public key (yi) relating to a second server (14), the first server is configured to:
- re-encrypt (24) the first encrypted key using a predetermined commutative type encryption algorithm and a public key (PK_Mj) relating to the first device; and
- send (26), to the second server, the first re-encrypted key.

15. A second server (14) for transmitting securely a first key (KENC* or Kp_i*), the second server is configured to:
- receive (26), from a first server (12), the first re-encrypted key, the first re-encrypted key being encrypted firstly with a public key (yi) relating to the second server and secondly using a predetermined commutative type encryption algorithm and a public key (PK_Mj) relating to a first device (16);
- decrypt (28), using the associated commutative type decryption algorithm, the first re-encrypted key using a private key (xi) relating to the second server; and
- send (210), to the first device, the first encrypted key.
